# EUROPEAN PATENT APPLICATION

(11) **EP 1 611 951 A1**
(43) Date of publication of application: **04.01.2006**
(21) Application number: 04291536.3
(22) Date of filing: 17.06.2004
(51) Int. Cl.: B01J 31/18, C08F 10/00, C08F 4/70, C08F 4/02

(54) **Use of ionic liquids for simultaneous deposition of several single site catalyst components on a support to generate hybrid polymers**

(71) Applicant: TOTAL PETROCHEMICALS RESEARCH FELUY, 7181 Seneffe (Feluy) (BE); CENTRE NATIONAL DE LA RECHERCHE SCIENTIFIQUE (CNRS), 75016 Paris (FR)
(72) Inventor: Lavastre, Olivier, 35490 Gahard (FR); Boulanger, Loise, 35700 Rennes (FR)
(74) Representative: Roufosse, Micheline C.

(57) **Abstract**

The present invention discloses the use of ionic liquids to deposit simultaneously several single site catalyst components onto the same support. It also provides new polymers prepared with said catalyst systems.

## Description

The present invention discloses the use of an ionic liquid to deposit simultaneously several single site catalyst components on a support.

It is known to deposit several metallocene catalyst components on the same or on different supports in order to obtain polymers having a multimodal molecular weight distribution. A method has been described for example in EP-A-619325 wherein two metallocene components based on the same metal, one being bridged and the other being unbridged, have been deposited on the same support. The method however is long and tedious. In addition, some methods of deposition are mutually exclusive and it may thus be impossible to deposit simultaneously different components when one component is adversely qualitatively or quantitatively affected by the method used to deposit another component.

There is thus a need to develop simple methods to deposit simultaneously one or more components that do not suffer from these drawbacks.

It is an aim of the present invention to use ionic liquids to deposit in a single step one or several single site components on the same support.

It is another aim of the present invention to prepare an active catalyst system prepared from several single site components.

It is yet another advantage of the present invention to prevent leaching of the catalyst components from the support.

It is a further aim of the present invention to provide a "multisite" catalyst system wherein the concentration of each component is easily controlled.

It is also an aim of the present invention to prepare polymers having a structure and morphology intermediate between those produced by every individual catalyst component.

It is yet another aim of the present invention to prepare polymers combining the advantages offered by each individual component

Accordingly, the present invention provides a method for preparing an active catalyst system comprising one or more single site catalyst components, that comprises the steps of:
a) providing a support prepared from at least one porous support;
b) impregnating the support with an activating agent;
c) dissolving the ionic liquids and the one or more single site catalyst components either in the same solvent or in different solvents followed by mixing of all solutions, in order to obtain an homogeneous phase;
d) impregnating the support of step b) with the solution of step c);
e) retrieving an active supported "multisite" catalyst component.

In another embodiment, the present invention provides a method for preparing an active catalyst system comprising one or more single site catalyst components that comprises the steps of:
a) providing a porous support;
b) dissolving the ionic liquids and the one or more single site catalyst components either in the same solvent or in different solvents followed by mixing of all solutions, in order to obtain an homogeneous phase;
c) pouring the solution of step b) onto the support of step a);
d) impregnating the loaded support of step c) with an activating agent;
e) retrieving an active supported "multisite" catalyst component.

In yet another embodiment, the present invention provides a method for preparing an active catalyst system comprising one or more single site catalyst components that comprises the steps of:
a) providing a porous support;
b) dissolving the ionic liquids and the one or more single site catalyst components either in the same solvent or in different solvents followed by mixing of all solutions, in order to obtain an homogeneous phase;
c) adding an activating agent to the solution of step b) in order to obtain an activated solution;
d) pouring the activated solution of step c) onto the support of step a);
e) retrieving an active supported "multisite" catalyst component.

The term "multisite" used in this description means that one or more single site components are deposited on the same support.

Preferably, the catalyst system comprises at least two single site catalyst components.

The support is prepared from porous supports such as mineral oxides or from organic matrix.
The porous mineral oxide particles preferably have at least one of the following characteristics:
- they include pores having a diameter ranging from 7.5 to 30 nm;
- they have a porosity ranging from 1 to 4 cm³ /g;
- they have a specific surface area ranging from 100 to 1000 m²/g; and
- they have an average diameter ranging from 1 to 100 µm.
It is preferably selected from silica, alumina and mixtures thereof, more preferably, the support is silica.

Alternatively, the support may be porous beads of polystyrene.
The starting porous beads of polystyrene have a size of from 250 to 500 microns and they are prepared from cross-linked polystyrene wherein the degree of cross-linking is ranging from 0.5 to 5 %. A proper level of cross-linking must be selected: it must be sufficiently high to insure shape constraint but sufficiently low to allow absorption of the active ingredients. A degree of cross-linking of from 1 to 2 % is preferred.

The activating agent must be able to activate the catalyst components. It can be selected from alumoxanes or aluminium alkyls depending upon the nature of the catalyst components.

The aluminium alkyls are of the formula AlR_{X} and can be used wherein each R is the same or different and is selected from halides or from alkoxy or alkyl groups having from 1 to 12 carbon atoms and x is from 1 to 3. Especially suitable aluminiumalkyl are dialkylaluminum chloride, the most preferred being diethylaluminum chloride (Et₂AlCl).

The preferred alumoxanes comprise oligomeric linear and/or cyclic alkyl alumoxanes represented by the formula : 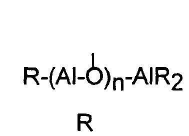 for oligomeric, linear alumoxanes
and 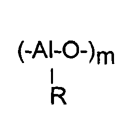 for oligomeric, cyclic alumoxanes,
wherein n is 1-40, preferably 10-20, m is 3-40, preferably 3-20 and R is a C₁-C₈ alkyl group and preferably methyl.
Methylalumoxane (MAO) is preferably used.

The ionic liquids that can be used in the present invention are prepared from a halogenated precursor of formula II

X―[-CH₂-]ₙ-R (II)

wherein X is an halogen, R is an end group and n is an integer of from 1 to 20..
The halogenated precursor of formula (II) reacts with an ionic liquid precursor, preferably with N-alkylimidazole or pyridine, in or without a solvent, said solvent if present being for example tetrahydrofuran (THF), CH₂Cl₂ or CH₃CN. The halogen anion X⁻ can be exchanged with other anions.

In the ionic liquid, the anion X⁻ can be selected from Cl⁻, Br, I⁻, BF₄⁻, PF₆⁻, AsF₆⁻, SbF₆⁻, NO₂⁻ and NO₃⁻, N(CF₃SO₃)₂⁻ (also represented as N(Tf)₂⁻), CF₃SO₃⁻ (also represented as Tf). It can also be selected from compounds of formula AlR_{4-z}A"_{z} wherein R can be selected from an alkyl having from 1 to 12 carbon atoms, substituted or unsubstituted, or from a cycloalkyl having 5 or 6 carbon atoms, substituted or unsubstituted, wherein A" is a halogen and wherein z is an integer from 0 to 4. The cationic part of the ionic liquid may be prepared by protonation or alkylation of a compound selected from imidazole, pyrazole, thiazole, triazole, pyrrole, indone, tetrazole, pyridine, pyrimidine, pyrazine, pyridazine, piperazine or piperidine.

Preferably, the anion X⁻ is Br⁻ or N(Tf)₂⁻, and preferably the cationic part is derived from imidazolium or pyridinium.

The halogenated precursor is reacted with an ionic liquid precursor, preferably a N-alkyl- imidazole or a pyridine, either in a solvent selected typically from tetrahydrofuran (THF), CH₂Cl₂ or CH₃CN, or without solvent.

If the ionic liquid precursor is N-alkyl-imidazole, the reaction is carried out at a temperature of from 50 to 150 °C, preferably of from 80 to 120 °C and for a period of time of from 1 to 24 hours, preferably of from 2 to 6 hours. The resulting intermediate product is an ion pair of formula III

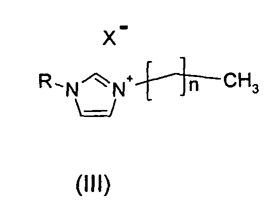

If the ionic liquid precursor is pyridine, the reaction is carried out at a temperature of from 50 to 120 °C, preferably of from 90 to 110 °C and for a period of time of from 1 to 24 hours, preferably of about 3 hours. The resulting product is an ion pair of formula IV

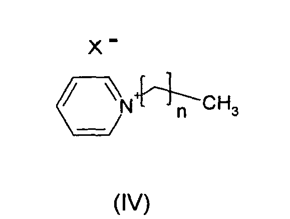

The one or more single site catalyst components can be selected from metallocene components, constrained geometry components or new single site components.

The metallocene catalyst components can be represented by general formula V

R"(CpRₙ)₂ MQ₂ (V)

wherein each Cp is the same or different and is a substituted or unsubstituted cyclopentadienyl ring, each R is the same or different and is a hydrocarbyl group having from 1 to 20 carbon atom and two neighbouring substituents can be linked to form a cycle, R" is a structural bridge imparting stereorigidity between the two Cp rings, M is a metal Group 4 of the Periodic Table and Q is halogen or an hydrocarbon having from 1 to 20 carbon atoms.

The constrained geometry catalyst component can be represented by general formula VI

R"(CpRₙ)X M (VI)

wherein R", Cp and Rₙ are as defined previously and X is an heteroatom, substituted or unsubstituted and selected from Group 15 or 16 of the periodic table, preferably, N, P or O.

The new single site catalyst component can be represented by general formula VII

(L)ₙM(Q)ₚ (VII)

wherein L is an heteroatom-containing ligand; n is an integer of 1, 2, or 3; M is selected from transition metals, preferably Ti, Zr, Sc, V, Cr, Fe, Co, Ni, Pd, or a lanthanide metal; each Q is independently a hydrocarbon having 1-20 carbon atoms or a halogen; and p is the valence of M minus the sum of the coordination numbers of all L.

The solvent can be selected from an alcane or an aromatic solvent. It is preferred to use the same solvent to dissolve the ionic liquid and all catalyst components but alternatively each component can be dissolved in its own solvent and all solutions mixed together. The solvent is preferably inert with respect to the activating agent. The most preferred solvent is toluene.

The present invention also provides an active "multsite" catalyst system obtainable by the method described hereabove. It further discloses a method for homo- or co-polymerising alpha-olefins with the new "multisite" catalyst system. The alpha-olefins is preferably selected from ethylene or propylene.

The present invention further provides a method for polymerising alpha-olefins that comprises the steps of:
a) injecting into the reactor the active catalyst system prepared by one of the methods described here-above;
b) injecting a monomer and one or more optional comonomers into the reactor;
c) maintaining under polymerisation conditions;
d) retrieving a polymer

The use of the ionic liquid to deposit the various single site catalyst components onto the activated support does not inhibit the activity of the various components but it produces a system that has an activity that is different from each component taken separately. The activity varies with the ionic liquid and with the catalytic components.

One of the catalyst components can be selected to oligomerise the monomer and therefore prepare a comonomer in situ.

The polymers obtained by the method of the present invention have a morphology that is a compromise between the morphologies respectively obtained with each individual catalyst component.

The main advantages of the present catalyst system are that the catalyst system is maintained on the support. In addition, the concentration of each catalyst component can be controlled and maintained as selected as the ionic liquid carries all components simultaneously on the support. Finally there is no interference between the different catalyst components.

Thanks to this method, active supported multi-component catalysts systems can be obtained: they can simultaneously comprise metallocene catalyst components and new single site catalyst components such as for example Ni- or Pd-based compounds.

### List of figures.

Figure 1 represents a picture of the granular powder of polyethylene obtained with the iron-based Gibson catalyst component in the presence of two different ionic liquids.

Figure 2 represents a picture of the chips of polyethylene obtained with the nickel-based Brookhart catalyst component used without ionic liquid or with various ionic liquids.

Figure 3 represents a picture of polyethylene obtained with a mixture of the same Gibson and Brookhart catalyst components as those used alone respectively in figures 1 and 2, used without ionic liquid or with various ionic liquids.

Figure 4 represents a picture of polyethylene obtained respectively with a Gibson catalyst component, with a Brookhart catalyst component and with a 50/50 mixture of Gibson and Brookhart catalyst components, all used with the same [Bmim]NTf₂ ionic liquid.

Figure 5 represents a picture of polyethylene obtained respectively with a Gibson catalyst component, with a Brookhart catalyst component and with a 50/50 mixture of Gibson and Brookhart catalyst components, all used with the same [C₁₂mim]Br ionic liquid.

Figure 6 represents a picture of the blocks of polyethylene obtained with a tetrahydroindenyl (THI) catalyst component used without ionic liquid or with various ionic liquids.

Figure 7 represents a picture of polyethylene obtained respectively with a Gibson catalyst component, with THI catalyst component and with a 50/50 mixture of Gibson and THI catalyst components, all used with the same [Bmim]NTf₂ ionic liquid.

### Examples.

The ionic liquid/catalyst component solution was prepared in inert conditions by dissolving the desired amount of the one or more catalyst components with one mole equivalent of ionic liquid in a corresponding volume of toluene. The solution was poured onto a silica previously impregnated with methylamuminoxane (MAO) in a hemolysis tube and the mixture was kept in contact during 30 minutes. The suspension was then filtered and the silica was washed with 0.3 mL of toluene and then three times with 0.3 mL of heptane. The silica was dried during one hour under vacuum.

A scavenger solution containing 0.1 to 0.15 mL of MAO (30 % in toluene) and 4.9 mL of heptane was added to the reactor containing 50 mL of heptane, followed by the addition into the reactor of a suspension of activated silica in 5 mL of heptane. The reactor was brought to polymerisation temperature and pressure and kept under polymerisation conditions for one hour.

The polymer so obtained was stirred in chlorhydric methanol at 5%, filtered, washed three times with methanol and once with acetone, and then dried under vacuum.

Two ionic liquids were tested:
IL1 was 3-methyl-1-butyl-imidazolium trifluoromethanesulfonimide [Bmim]NTf₂ 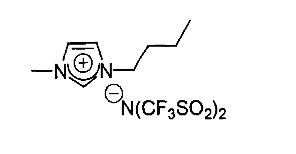
IL2 was 3-methyl-1-dodecyl-imidazolium bromide ([C₁₂mim]Br

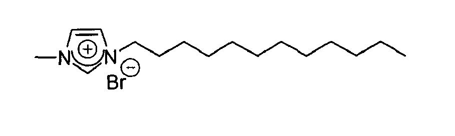

Three catalyst components were tested alone or in combination with and without ionic liquid:
C1 was a Gibson catalyst component based on iron and given by formula 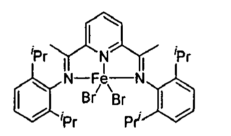
C2 was a Brookhart catalyst component based on nickel and given by formula 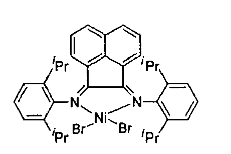
C3 was a metallocene catalyst component based on a tetrahydroindenyl ligand THI and given by formula ethylene bis(4,5,6,7-tetrahydo-1-indenyl) zirconium dichloride.

Ethylene was polymerised with various catalyst / ionic liquid combinations. The catalyst component combinations, polymerisation conditions and polymer properties are summarised in Tables I and II.

In Table I all polymerisation reactions were carried out at a temperature of 25 °C and under an ethylene pressure of 5 bars.

**TABLE I**

| catalyst | IL | m_{cata} mg | vₜₒₗᵤₑₙₑ mL | m_{impregnated silica} mg | m_{injected silica} mg | g C₂H₄ /g Si/h | Tf °C |
|---|---|---|---|---|---|---|---|
| C1 | - | 3.2 | 0.6 | 88.8 | 18 | 278 | 136 |
| C1 | IL1 | 3.2 | 0.6 | 89 | 13.4 | 205 | 140 |
| C1 | IL2 | 3.2 | 0.86 | 93 | 18 | 179 | 138 |
| C2 | - | 3.2 | 0.7 | 87.2 | 14.5 | 226 | 107^{a} & 118 |
| C2 | IL1 | 3.2 | 0.7 | 90.1 | 18.1 | 200 | 108 &117^{b} |
| C2 | IL2 | 3.2 | 0.74 | 88.3 | 14.4 | 127 | 108 & 116^{b} |
| C1+C2 | - | 1.6+1.6 | 0.6 | 88.7 | 11.8 | 154 | 132 |
| C1+C2 | IL1 | 1.6+1.6 | 0.7 | 88.7 | 22.2 | 175 | 139 |
| C1+C2 | IL2 | 1.6+1.6 | 1.1 | 89.7 | 11.8 | 76 | 139 |

| | | | | | | | |
|---|---|---|---|---|---|---|---|
| ^{a} : main peak at 107°C | | | | | | | |
| ^{b} : both peaks have same intensity | | | | | | | |

The amount of ionic liquid in each polymerisation was of one molar equivalent of ionic liquid with respect to the catalyst component.

The melting temperatures were obtained by Differential Scanning Calorimetry (DSC).

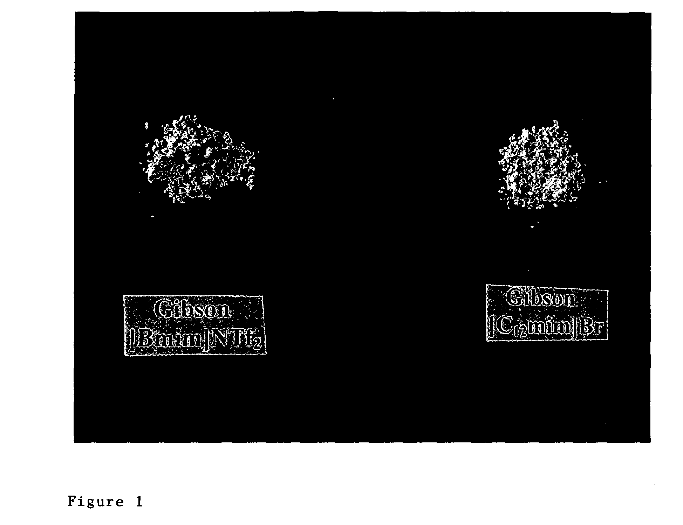

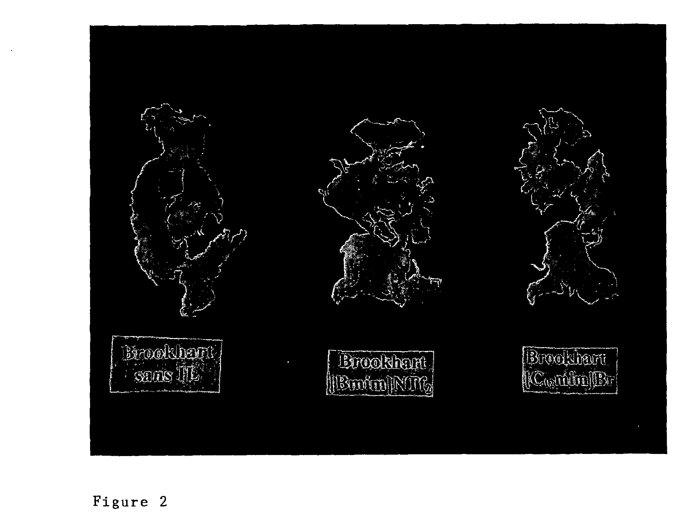

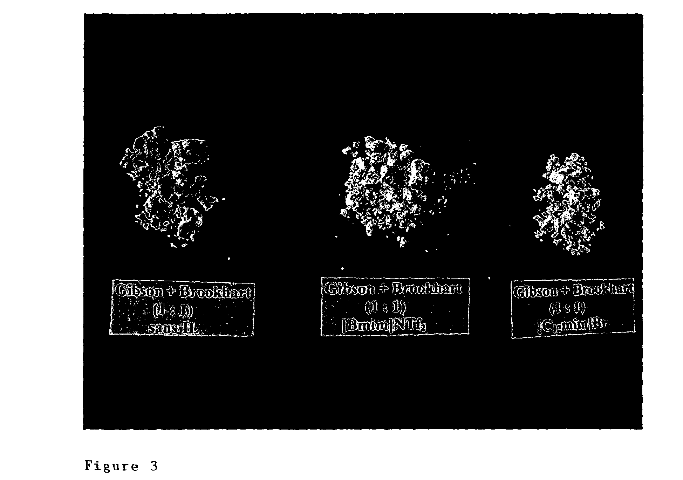

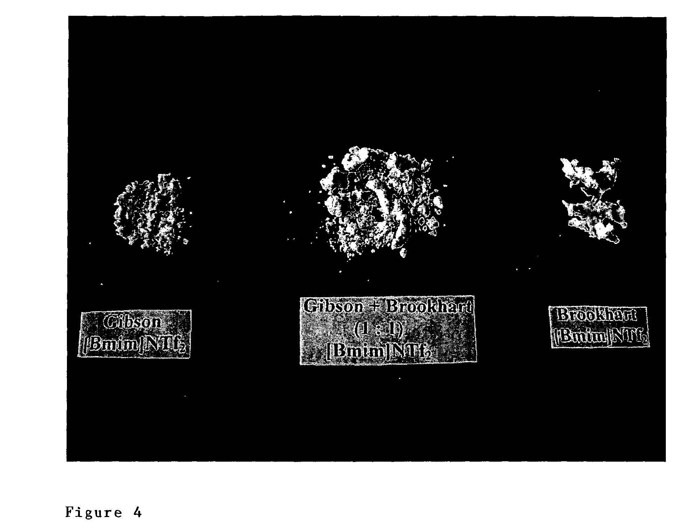

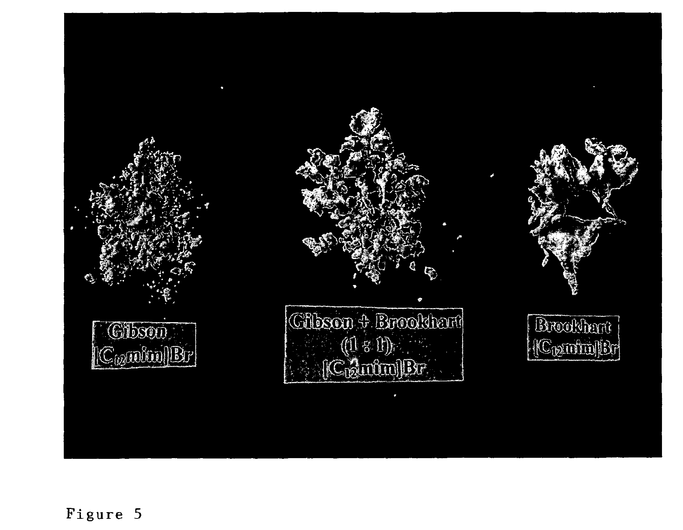

The morphology of all the polyethylene obtained using the various catalyst components of Table I with or without ionic liquid are represented in Figures 1 to 5. It can be seen that different catalyst components, when used alone, gave different polymer morphologies. When the catalyst components were used in combination, the morphology of the resulting polymer was intermediate between those obtained with the individual catalyst components. It was also observed that the nature of the ionic liquid has an influence on the morphology of a polymer obtained with a combination of catalyst components.

All polymerisation reactions in Table II were carried out at a temperature of 50 °C and under a pressure of 20 bars of ethylene.

**TABLE II.**

| catalyst | IL | m_{cata} mg | vₜₒₗᵤₑₙₑ mL | m_{impregnated silica} mg | m_{injected silica} mg | g C₂H₄ /g Si/h | Tf °C |
|---|---|---|---|---|---|---|---|
| C3 | - | 1.5 | 0.85 | 91.3 | 11.8 | 511 | 142 |
| C3 | IL1 | 1.5 | 1.08 | 88.6 | 14.5 | 369 | 140 |
| C3 | IL2 | 1.5 | 1.35 | 95.9 | 15.7 | 373 | 139 |
| C1 | IL1 | 3.2 | 0.6 | 83.4 | 13 | 305 | 140 |
| C1+C3 | IL1 | 0.56+1.5 | 0.8 | 83.8 | 18.1 | 335 | 139 |

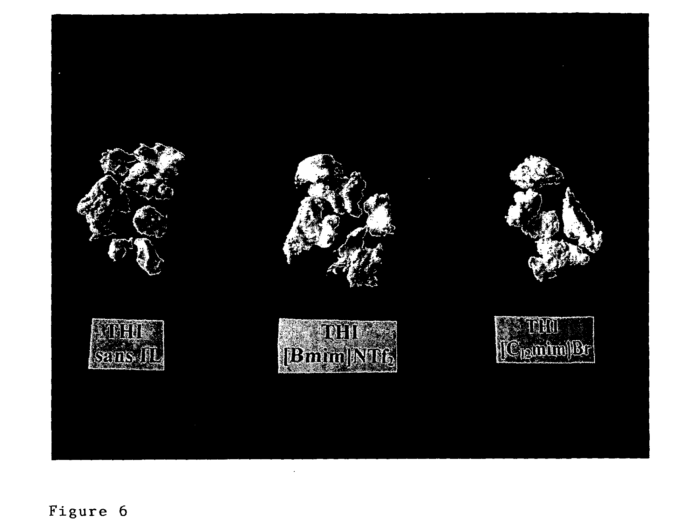

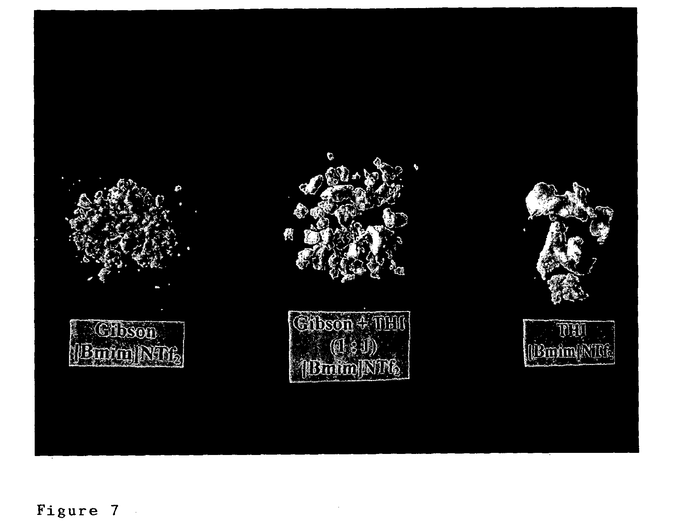

The morphology of the polyethylene obtained with the Gibson and/or THI catalyst components are displayed in Figures 6 and 7. It can be seen that the morphology of the polyethylene obtained with a mixture of catalyst components and ionic liquid is here also intermediate between those obtained with the individual components.

## Claims

1. A method for preparing an active catalyst system comprising one or more single site catalyst components that comprises the steps of:
a) providing a support prepared from at least one porous mineral oxide;
b) impregnating the support with an activating agent;
c) dissolving the ionic liquids and the one or more single site catalyst components either in the same solvent or in different solvents followed by mixing of all solutions;
d) impregnating the support of step b) with the solution of step c);
e) retrieving an active "multisite" catalyst component.

2. The method of claim 1 wherein the impregnation of the support with the activating agent is carried out after impregnation of the support with the catalyst component/ionic liquid solution.

3. The method of claim 1 wherein the activating agent is dissolved in a solvent with the catalyst component and the ionic liquid to prepare a solution that is poured onto the support.

4. The method of any one of claims 1 to 3 wherein the active catalyst system comprises at least two different single site catalyst components.

5. The method of any one of claims 1 to 4 wherein the support is inorganic with a porosity ranging from 1 to 4 cm³ /g and a specific surface area ranging from 100 to 1000 m²/g.

6. The method of any one of claims 1 to 4 wherein the support wherein the support is a bead of polystyrene.

7. The method of any one of the preceding claims wherein the activating agent is selected from aluminium alkyl or alumoxane.

8. The method of any one of the preceding claims wherein the ionic liquid is prepared by reacting an ionic liquid precursor with an halogenated precursor of formula X―[CH₂-]ₙ―R wherein X is a halogen, R is an end group and n is an integer of from 1 to 20.

9. The method of claim 8 wherein the ionic liquid precursor is N-alkylimidazole or pyridine.

10. The method of claim 8 or claim 9 wherein the anion X⁻ in the ionic liquid is Br⁻ or N(Tf)₂⁻.

11. The method of any one of claims 1 to 10 wherein each single site catalyst component is independently selected from a metallocene catalyst component, a constrained geometry catalyst component or a new single site catalyst component.

12. An active catalyst system comprising one or more single site catalyst components obtainable by the method according to any one of claims 1 to 11.

13. A method for homo- or co-polymerising alpha-olefins that comprises the steps of:
e) injecting the active catalyst system of claim 12 into the reactor;
f) injecting a monomer and one or more optional comonomer into the reactor;
g) maintaining under polymerisation conditions;
h) retrieving a polymer

14. The method of claim 13 wherein the monomer is ethylene or propylene.

15. Polymer obtainable by the method of claim 13 or claim 14.
